# EUROPEAN PATENT SPECIFICATION

(11) **EP 4 204 274 B1**
(45) Date of publication and mention of the grant of the patent: **15.04.2026**
(21) Application number: 22798160.2
(22) Date of filing: 13.10.2022
(51) Int. Cl.: B61D 17/14, B61D 17/22

(54) **ROOFTOP CROSSMEMBER**
DACHQUERTRÄGER
TRAVERSE DE TOIT

(30) Priority: 14.10.2021 IT 202100026393
(43) Date of publication of application: 05.07.2023
(73) Proprietor: ALSTOM Holdings, 93400 Saint-Ouen-sur-Seine (FR)
(72) Inventor: HARTMANN, Stefan, Wien (AT); LAFLAMME, Martin, Saint-Romuald QC G6W 7J1 (CA)
(74) Representative: Alatis
(86) International application number: PCT/EP2022/078594
(87) International publication number: WO 2023/062171

(56) References cited:
- CN-A- 107 458 397
- CN-A- 113 479 222
- CN-U- 213 384 238
- US-A- 4 781 123

## Description

The invention relates generally to the field of passenger cars construction, in particular to the field of streetcars and light rail vehicles.

More specifically, the invention relates to the rooftop structure of a passenger car adjacent to the gangway bellows interconnecting two passenger cars, the drainage of rainwater accumulating on the roof of passenger cars, and the power supply accommodation on the roof of passenger cars.

In mainline vehicles like commuter passenger cars or light rail vehicles like metro cars, two adjacent railway cars are mechanically connected by bearings. Each of the adjacent passenger cars presents a cantilever half bridge which form together a catwalk bridging the two adjacent passenger cars for enabling passengers to move from a car to another. A gangway bellow surrounding the cantilever half bridges is attached to each passenger car so that, when the cars are connected, the gangway bellow is pressed between the adjacent passenger cars. Thus, the gangway bellow forms a hood-like structure surrounding an opening at the front or rear-end of the passenger car, through which passengers can walk safely and in a relatively protected environment from one car to another even when the streetcar is traveling.

The passenger car presents a rooftop comprising on each lateral edge a sidemember and a crossmember mechanically bridging the sidemembers and located along the transversal edge of the rooftop adjacent to the gangway bellow. The crossmember is made of several pieces welded together in order to contribute to the stiffness of the rooftop.

The gangway bellow has corrugations made of parallel valleys and crests interleaved along a longitudinal axis of the car. This corrugated structure allows deformations of the gangway when the cars travel in a curved track section. Rainwater falling on the gangway bellow accumulates in the upper part of the bellow valleys and flows to the ground along the bellow valleys.

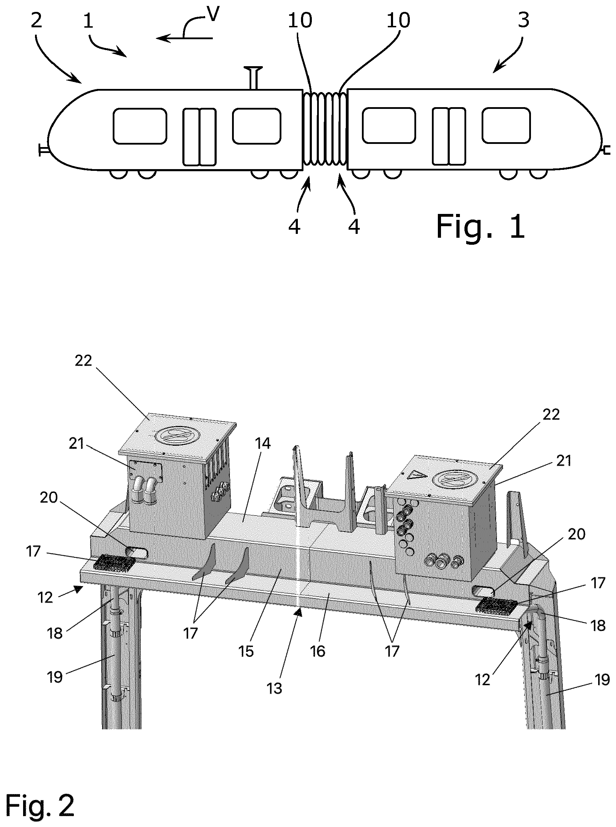

As shown in figure 2, rainwater accumulating on a rooftop of the streetcar is drained to the ground by gutter devices using hoses and pipes running in the interior of the passenger car. Such gutter devices guide the water to be drained from the outside of the passenger car to the inside before letting it flow to the ground. This requires installation space inside the passenger car which can be used for hosting equipment achieving more important function or for improving passenger comfort. When the gutter devices run completely outside the car, they affect the shape of the car body which may negatively impact external dimensions and esthetic of the passenger car. Moreover, gutter devices require filtration grids on the rooftop for avoiding that dirt obstructs the drainage hoses and pipes. However, these filtration grids require frequent cleaning and slow down the water evacuation so that, in addition to the gutter devices, overfull devices are required for avoiding that water accumulating on the rooftop overflows along the sides of the streetcar. A similar conventional arrangement of the gutter device of a streetcar is disclosed in CN 113479222 A.

The overfull device consists conventionally in pipes extending through the crossmember close to each extremity of said crossmember and presenting a threshold higher than the rooftop. An electric housing is mounted on the crossmember about upright to each overfull device. These electric housings host usually supply power connections for the passenger cars. The gutter and overfull devices, the electric housing and the crossmember form together a rooftop crossmember assembly. Therefore, a conventional rooftop crossmember assembly is constituted of a high number of pieces with most of them being usually assembled by MAG welded.

Therefore, there is a need for a lighter rooftop crossmember assembly with a reduced number of pieces, cheaper to produce, and which integers non-mechanical functions.

Accordingly, an object of the present invention is to provide a simpler rooftop crossmember cheaper to produce and integrating a less complex water drainage device requiring less maintenance and taking up less space.

For this purpose, it is proposed according to a first aspect of the invention rooftop crossmember as defined in any one of the claims 1 to 7.

According to a second aspect of the invention, it is proposed a rooftop assembly as defined in claim 8**.**

According to a third aspect of the invention, it is proposed a passenger car as defined in claim 9.

According to a fourth aspect of the invention, it is proposed a method for manufacturing a rooftop as defined in claim 10**.**

Other features and advantages of the present invention will emerge from the following description of embodiments of the invention provided as non-limitative examples for achieving various aspects of the invention. The description refers to the attached figures which illustrate, also by way of example, an embodiment of the inventions:
[Fig. 1]: Figure 1 shows a side view of a streetcar;
[Fig. 2]: Figure 2 shows a perspective view from above and from left of a conventional crossmember assembly of a streetcar;
[Fig. 3]: Figure 3 shows a perspective view from above and from left of a rooftop assembly with a rooftop crossmember according to the invention;
[Fig. 4]: Figure 4 shows a perspective view from above and from left of the rooftop assembly of figure 3 with the gangway bellow and cut according to a vertical plan; and
[Fig. 5]: Figure 5 shows an exploded view of the rooftop crossmember shown in figures 3 and 4.

For the reader convenience, identical or similar elements bear the same reference over the whole figures set.

In the following, when it is referred to vertical and horizontal, front and rear, or top and bottom, this must be construed by reference to a vehicle in regular operating position.

Figure 1 illustrates a streetcar 1 composed of, for example, a front passenger car 2 connected to a rear passenger car 3. When the streetcar 1 is moving in a direction V, the rear end of the front passenger car 2 is connected to the opposite front end of the rear passenger car 3. As required, a streetcar may be composed of only one front passenger car 2 connected directly to one rear passenger car 3 or to one or more middle passenger modules (not shown). Front and rear passenger cars 2 and 3 and passenger modules are connected together through a gangway bellow 4 which can be in one piece as shown in figure 1 or in two gangway bellow halves (not shown) each being fixed to the rear or front end of a passenger car or module. When two passenger cars 2 and 3 and/or passenger modules are connected together, the gangway bellow 4 is pressed between the respective passenger cars and/or modules. In the following, it is referred to passenger cars for simplifying the description but the description applies also to middle passenger modules.

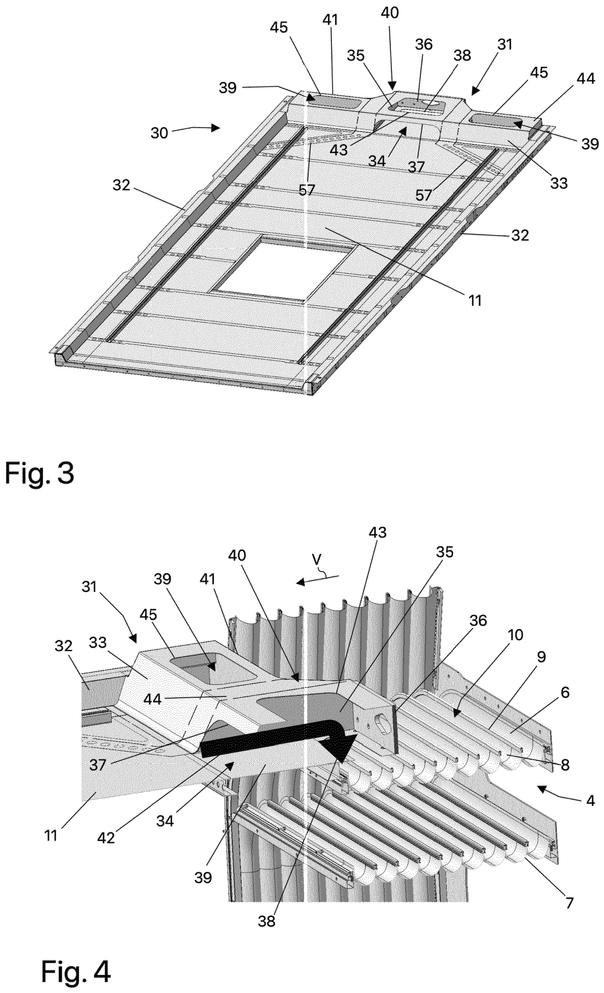

When the passenger cars 2 or 3 are connected together the gangway bellow 4 forms an entirely or partially closed volume surrounding an articulated gangway 5 linking together the connected front and rear passenger cars 2 and 3. As shown in figure 4, the gangway bellow 4 comprises an outer bellow 6 surrounding an inner bellow 7. More frequently, gangway bellows 4 are only in one part so that the inner bellow 7 is optional. At least the outer bellow 6 shows corrugations made of a plurality of bellow valleys 8 separated one from another by a plurality of bellow crests 9. Said plurality of bellow valleys 8 and bellow crests 9 are disposed parallelly to each other along the moving direction V.

When the passenger cars 2 or 3 are connected, the gangway bellow 4 surrounds the articulated gangway 5 so that passengers can walk through the articulated gangway 5 safely and in protected conditions irrespectively of the weather outside of the streetcar 1. In the following, the description will focus for convenience on the front passenger car 2. Features of the front passenger car 2 can be transposed substantially by axial symmetry to the rear passenger car 3. When it rains, rainwater dropping on the bellow tops 10 accumulates in upper parts of the bellow valleys 8 and is drained to the ground along the bellow valleys 8. In conventional street cars rainwater accumulating on the rooftops 11 is drained to the ground by gutter devices 12 as shown in figure 2 and described below.

Figure 2 illustrates the end of a conventional passenger car 2 facing the gangway bellow 4 at the level of the rooftop 11. Rainwater accumulating on the rooftop 11 of passenger cars of the prior art is usually drained to the ground by a gutter device 12 located on each side of the rooftop 11 in front of a transversal beam 13. The transversal beam 13 comprises an upper piece 14 and a front piece 15 extending transversally to the moving direction V and mechanically attached together by MAG welding along their respective facing lateral edges. A horizontal extension piece 16 is mechanically attached to the front piece 15 also by MAG welding along their respective facing longitudinal edges. The attachment between the front piece 15 and the horizontal extension piece 16 is strengthened by several stiffening pieces 17 disposed along a transversal direction of the rooftop 11. The upper face of the horizontal extension piece 16 is located at the same height as the upper surface of the rooftop 11 so that rainwater flows to the gutter devices 12 via flushing openings made through the horizontal extension piece 16. A filtration grid 17 protects each flushing opening for avoiding that dirt lying on the rooftop blocks the gutter devices 12. Rainwater is guided from the flushing openings to the floor by a succession of hoses 18 and pipes 19 runing inside the passenger car.

Rainwater drainage by the gutter devices 12 of the prior art presents several drawbacks. On the one hand, it extends inside the passenger car for draining rainwater from the outside to the inside of the passenger car, and back to the outside for flowing on the ground. This takes up inner space on both sides of the passenger car and requires several gutter pieces. On the other hand, the filtration grids 17 protecting the flushing openings must frequently be cleaned for avoiding that, for example, leaves lying on the rooftop 11 obstructs the filtration grids 17. This requires frequent maintenance interventions increasing the operation costs of the streetcar 1.

In addition, overfull devices 20 are required in order to avoid that rainwater overflows on the sides of the passenger car, for example in case of heavy rain. There are two overfull devices 20, each one being located close to one of the filtration grids 17. Each overfull device 20 presents a pipe extending from the front piece 15 through the transversal beam 13 in the moving direction V with a threshold located higher than the level of the rooftop 11.

Above each overfull device 20, an electric box 21 is secured on the upper piece 14 of the transversal beam 13. The electric boxes 21 contain connections of the power supply to electrical components of the passenger car. The electric boxes 21 are additional components added to the transversal beam assembly and increasing the complexity and assembling time of this part of the passenger car 2. The mechanical connection between each electric box 21 and the upper piece 14 of the transversal beam 13 and between said electric boxes 21 and their respective electric box lid 22 must be watertight. The electric boxes 21 extend well above the transversal beam 13 and are thereby very much exposed to all kinds of mechanical hazards. Consequently, the electric boxes must be sufficiently robust as well as their connection to the rooftop through the transversal beam 13 which contributes to increasing the weight of the transversal beam assembly.

In the conventional configuration shown in figure 2, the overfull devices 20, the filtration grid 17 and the flushing openings of the gutter devices 12 must be positioned close to each extremity of the transversal beam 13 in order to ensure that rainwater will not overflow on the sides of the passenger car 2 when the streetcar 1 travels in a curve. Therefore, despite the fact that the transversal beam 13 is substantially hollow, part of its inner protected space is occupied by the overfull devices 20 at the level of the power supply connections.

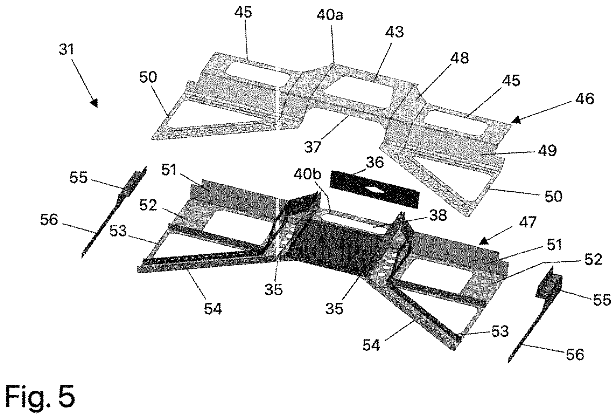

As explained above, there is a general need for improving the structure of the rooftop assembly of a passenger car 2 at the level of the gangway bellow 4. In the following with the support of figures 3 and 4, a rooftop assembly 30 is described which comprises a rooftop crossmember 31 overcoming at least most if not all of the drawbacks of the conventional transversal beam assembly shown in figure 2. Figure 5 shows an exploded view of a possible but non-limitative embodiment of the rooftop crossmember 31 according to the invention.

Figure 3 shows a rooftop assembly 30 comprising a rooftop 11 generally flat and rectangular, and closing a substantial part of the passenger car upper part. The rooftop 11 is bordered on both of its longitudinal edges by rooftop sidemembers 32 and on its transversal edge adjacent to the bellow 4 (namely the rear transversal edge of the front passenger car 2 and the front transversal edge for the rear passenger car 3) by the rooftop crossmember 31. Thereby, the rooftop crossmember 31 bridges the two rooftop sidemembers 32 which are all three mechanically secured together and attached to the rooftop 11, e.g., by MAG or laser welding, for strengthening the rooftop assembly 30.

The rooftop crossmember 31 presents an elongated hollow structure with a generally quadrilateral cross section formed by a plurality of structural elements which are assembled preferably by laser welding, and designed for providing together the required mechanical strength to the crossmember 31 while contributing to the overall lightness of the design of the rooftop crossmember 31. Preferably, a front side 33 of the rooftop crossmember 31 may be tilted backwardly with respect to the vertical for improving the performances of the rooftop assembly 30, for example the aerodynamic performance. The rooftop crossmember 31 is arranged for integrating a drainage channel 34 which is located preferably in the middle of the rooftop crossmember 31. Two lateral channel walls 35 located inside the rooftop crossmember 31 delimit laterally the drainage channel 34 on each side, and a rear channel panel 36 closes the drainage channel 34 at the back of the rooftop crossmember 31.

As shown in figure 4, rainwater accumulating on the rooftop 11 flows through the drainage channel 34 according to the water flow visualized by arrow 42. Rain water accumulating on the rooftop 11 flows into the drainage channel 34 by a water inlet 38 formed through the front side of the rooftop crossmember 31. The threshold of the water inlet is flush with the upper face of the rooftop 11 and the size of the water inlet 37 is sufficient for avoiding that water accumulating on the rooftop 11 reach a critical level. This configuration enables the width of the water inlet 37 to be comprised between a fifth to a third of the rooftop width according to the vehicle width for swallowing water on the rooftop even in case of heavy rain. For example, the width of the water inlet 37 is one third of the rooftop width for a 2300mm width vehicle. Moreover, the size of the water inlet prevents dirt, such as tree leaves, to obstruct the water inlet 37. Consequently, an overfull device is not necessary.

The rooftop cross member presents a cantilevered rear protrusion 40 extending from a backside 41 of the crossmember 31 above the gangway bellow 4. Rain water flowing through the drainage channel 34 is evacuated downwardly on the gangway bellow by a water outlet 38 formed through a bottom side 39 of the rooftop crossmember 31 and located in the area of the rear protrusion 40 over the gangway bellow 4. The water outlet 38 is dimensioned for allowing the evacuation of rainwater on the gangway bellow 4 even in case of heavy water and for preventing its obstruction by dirt pushed by water or air in the drainage channel 34. Therefore, a filtration grid at the level of the water inlet 37 is not necessary. Alternatively, the water outlet can be formed through the rear channel panel 36 with a threshold flush with the upper face of the bottom side 39 (option not shown). A cleaning opening 43 is formed through a top side 44 of the rooftop crossmember 31 for inspecting and cleaning conveniently the drainage channel 34.

As described above and illustrated in figures 3 and 4, the drainage channel 34 is fully integrated into the rooftop crossmember 31 and requires fewer elements than in the prior art. Moreover, filtration grid and overfull devices are not anymore necessary thanks to the streamlined design of the drainage channel 34 and its position in the front and bottom sides 33 and 39 of the rooftop crossmember 31 where large cutouts can be made for forming the water inlet 37 and the water outlet 38. This simplifies significantly the overall rooftop assembly 30 and the manufacturing of the rooftop crossmember 31. In addition, less frequent maintenance interventions are necessary for cleaning the drainage channel 34 of the invention.

Besides, the central position of the drainage channel 34 through the rooftop crossmember 31 frees the lateral inner volumes of the crossmember 31 located on both sides of the drainage channel 34, between the drainage channel 34 and each side member 32. These empty inner volumes can be used for hosting other non-mechanical functions than rainwater drainage. For example, each of these lateral inner volumes can be used as electric housing 39 for hosting the power supply connections to the passenger car 2. An access opening 45, which can be closed by a lid (not shown), is formed through the top side 44 of the rooftop crossmember 31. This access opening 45 enables inspection and mounting of the power supply connections.

Consequently, the electric power connections of the passenger car are located in a protected environment inside the crossmember 31 and not in electric boxes fixed on the top of the rooftop crossmember. Their integration into the rooftop crossmember 31 improves the aerodynamic and design of the streetcar 1. In addition, the electric connections are less exposed to mechanical incidents. Moreover, sealing is only necessary between the lid and top side 44 of the rooftop crossmember 31 and is easy to achieve.

As shown in Figure 5, the rooftop crossmember 31 comprises a plurality of structural elements which, when they are attached, form an elongated hollow structural beam. The function of the rooftop crossmember 31 is primarily mechanical as it contributes with the rooftop sidemembers 32 to provide mechanical strength to the rooftop assembly 30. To this aim, the structural elements constituting the rooftop crossmember 31 comprise an upper structural element 46 and a lower structural element 47. The structural elements are preferably attached together by laser welding. However, other types of welding or of irreversible mechanical attachment can be used as well. According to the invention and as indicated above, additionally to the mechanical function, non-mechanical functions can be integrated in the rooftop crossmember 31, in particular non-mechanical functions performed by means conventionally positioned in the area of the rooftop assembly 30 where the rooftop crossmember 31 is located. In the embodiment of the invention described and illustrated in figures 3 to 5, the non-technical functions integrated in the rooftop crossmember 31 are the drainage of rainwater and protection of the electric power connections.

The upper structural element 46 presents a lid plate 48 prolonged by a downwardly tilted wall 49 extending downwardly from the front longitudinal edge of the lid plate 48. The lid plate 48 and the downwardly tilted wall forming respectively the top side 44 and the front side 33 of the rooftop crossmember 31. Optionally, the downwardly tilted wall 49 is itself prolonged horizontally by two upper angle brackets 50. Said upper angle brackets 50 extend horizontally from the bottom longitudinal edge of the downwardly tilted wall 49 on both side of a cutting in the downwardly tilted wall 49 forming the water inlet 37 of the drainage channel 34. The central part of the lid plate 48 aligned with the water inlet 37 cutting extends rearward to form an upper part of the rear protrusion 40a. The cleaning opening 43 is cut out in the area of the lid plate aligned with the upper part of the rear protrusion 40a and the water inlet 37 cutting. The access openings 45 of the electric housing 39 are cut out in the lid plate 48 between each extremity of the upper structural element 46 and the cleaning opening 43.

The lower structural element 47 presents upright walls 51 extending substantially vertically from the back longitudinal edge of a base plate 52 on both sides of the middle of the base plate 52. One the one hand, the upright wall 51 forms at least part of the backside 41 of said rooftop crossmember 31, and on the other hand, the base plate 52 forms the bottom side 39 of the rooftop crossmember 31. Optionally, the base plate 52 is prolonged horizontally by two lower angle brackets 53 extending horizontally from the front longitudinal edge of the base plate 52 on both ends of the base plate 52. The central part of the base plate 52 between the upright walls 51 extends rearward to form a lower part of the rear protrusion 40b. The water outlet 38 is cut out in this lower part of the rear protrusion 40b.

The lateral channel walls 35 are formed by metal plates and are optionally prolonged forward by front stiffeners 54. Each front stiffener 54 cooperates with the hypotenuse of the respective upper and lower angle brackets 50 and 53. The rear channel panel 36 cooperates with the rear edge of the upper and lower part of the rear protrusion 40a and 40b for closing the drainage channel 34 downstream of the water outlet 38. Thereby, the drainage channel 34 is delimited by the central part of the lid plate 48, the central part of the base plate 52, the lateral channel walls 35 and the rear channel panel 36.

An end closure profile 55 closes each lateral extremity of the hollow structure formed by the assembly of the lower and upper structural elements 46 and 47. Each end closure profile 55 is optionally prolonged by a lateral stiffener 56 which cooperate with the lateral edge of the upper and lower angle brackets 50 and 53 of the lower and upper structural elements 46 and 47.

The lateral channel walls 35 and the end closure profiles 55 are part of the structural elements with the lower and upper structural elements 46 and 47. The structural elements are mounted together by slits and tabs formed respectively in adjacent parts of the structural elements and irreversibly secured together by laser welding for forming the rooftop crossmember 31. Alternatively, other methods of welding or even different attaching means than welding can be used.

Lateral stiffeners 56 and front stiffeners 54 are secured to the lower and upper angle brackets 53 and 50 for forming mounting brackets 57 in the front part of each end of the rooftop crossmember 31. The mounting brackets 57 are mechanically attached to the sidemembers 32 for strengthening the fastening of the rooftop crossmember 31 to the sidemembers 32.

The structural elements described above, which form the rooftop crossmember 31 once assembled, are cut out in metal sheets by stamping, laser cutting or any other cutting method. Then, the structural elements are shaped by bending their respective parts. Preferably, said structural elements are cut out and bent in one step by stamping. Eventually, the structural elements are pre-assembled by the slits and tabs and secured together by laser welding. In particular, the upper and lower structural elements 40a and 40b are laser welded together by their respective front and back longitudinal edges.

As indicated above, the described rooftop crossmember 30 of the invention is lighter, simpler, and cheaper to manufacture. Despite its lighter structure, the design of the rooftop crossmember 30 provides the same or even a larger mechanical strength to the upper rear part of the passenger car 2 supporting important mechanical constraints. Moreover, non-mechanical functions are integrated in the conception of the rooftop crossmember 30 which reduces the number of components forming the rooftop crossmember assembly. The rainwater drainage function has been integrated in the middle section of the rooftop crossmember 30 and its design does not require overfull devices and complex piping for draining rainwater out of the rooftop 11. Thereby, the inner space at each extremity of the rooftop crossmember 31 is available for hosting the power supply connection to the electrical components of the passenger car 2. For this reason, there is no need for additional electric boxes on the top of the rooftop crossmember 31 which reduces the potential mechanical constraints on the top side of the rooftop crossmember 31 and reduces the watertightness requirement to only the electric housing lid. The sensitive electric components are thereby moved to the inside of the rooftop crossmember 31 where there are less exposed to mechanical hazards.

The above description and the figures relate to different embodiments of specific aspects of the invention, in particular the structure of the drainage channel 34 and of the electric housings 39, and their respective integration in the rooftop crossmember 31. They could be configured and implemented in other ways and in different contexts such as, for example, railway cars, light railway vehicles, underground vehicles, or other urban vehicles such as articulated buses. Besides, the integration of the electric housings 39 in the crossmember 31 in the configuration described above has been made possible by the integration of the rainwater drainage in the central part of the rooftop crossmember 31, and their combined integration in the rooftop crossmember 31 is a preferred option. However, still according to the invention, the rainwater drainage function could be integrated in the rooftop crossmember 31 independently from the electric housing function, or in combination with other non-mechanical functions.

## Claims

1. Rooftop crossmember (31) for structurally bridging rooftop side members (32) at an end of a rooftop (11) of a railway passenger car (2, 3) adjacent to a gangway bellow (4) and comprising a plurality of structural elements, wherein said structural elements comprise an upper structural element (40a) and a lower structural element (40b) shaped and attached together for forming a hollow structure integrating means for performing non-mechanical functions; said means for performing non-mechanical functions comprise:
- a water drainage channel (34) located on a central part of said rooftop crossmember (31) and extending substantially transversally through said rooftop crossmember (31) for evacuating water accumulating on the rooftop (11) on the top part of said gangway bellow (4).

2. Rooftop crossmember according to claim 1, comprising further:
- at least an electric housing (29) hosted within an empty volume located between said upper and said lower structural elements (40a, 40b) of said rooftop crossmember (31) between said drainage channel (34) and an extremity of said rooftop crossmember (31).

3. Rooftop crossmember according to claim 1 or 2, wherein said structural elements are attached together by laser welding for providing mechanical strength to said rooftop crossmember (31), whereas said upper and lower structural elements (40a, 40b) are mechanically attached by their respective longitudinal edges so that said rooftop crossmember (31) presents a substantially quadrilateral cross section with a front side (33) opposed to a backside (41), and a bottom side (39) opposed to a topside (44).

4. Rooftop crossmember according to claim 3, wherein:
- said lower structural element (40b) presents at least an upright wall (51) extending upwardly from a back longitudinal edge of a base plate (52), said upright wall (51) forming at least part of said backside (41) of said rooftop crossmember (31), and said base plate (52) forming said bottom side (39) of said rooftop crossmember (31); and/or
- said upper structural element (40a) presents a downwardly tilted wall (49) extending downwardly from a front longitudinal edge of a lid plate (48), said downward tilted wall (49) forming said front side (33) of said rooftop crossmember (31) and said lid plate (48) forming said topside (44) of said rooftop crossmember (31).

5. Rooftop crossmember according to claim 3 or 4, wherein said drainage channel (34) protrudes backwardly from the backside of said rooftop crossmember (31) for extending above said gangway bellow (4), and comprises:
- a water inlet (37) formed through the front side (33) of said rooftop crossmember (31) with a threshold flush with an upper face of said rooftop (11) so that rainwater accumulating on said rooftop (11) flows without hurdles in said drainage channel (34); and/or
- a water outlet (38) formed through the bottom side (39) of said rooftop crossmember (31) and leading on the top part of said gangway bellow (4) so that rainwater in the drainage channel is naturally downwardly evacuated on said gangway bellow (4).

6. Rooftop crossmember according to anyone of claims 2 to 5, wherein at least an opening (43, 45) is formed on the top side (44) of the upper structural element (40a) for acceding to said at least one electric housing (29) and/or said drainage channel (34).

7. Rooftop crossmember according to any one of claims 2 to 6, comprising two electric housings (29) located on each side of said drainage channel (34).

8. A rooftop assembly for a railway passenger car (2, 3) comprising sidemembers (32) extending longitudinally along lateral edges of a rooftop (11) and a rooftop crossmember (31) extending between said sidemembers (32) along a transversal edge of said rooftop (11) adjacent to a gangway bellow (4), **characterized in that** said rooftop crossmember (31) is defined in any one of the preceding claims.

9. Passenger car **characterized in that** it comprises a rooftop assembly (30) according to claim 8 wherein non-mechanical functions are integrated in a rooftop crossmember as defined in any one of the claims 1 to 7.

10. Method of manufacturing a rooftop crossmember according to any one of the claims 1 to 7, wherein:
- said structural elements are pre-assembled by slits and tabs;
- said structural elements are secured together by laser welding; and/or
- said upper structural element (40a) and said lower structural element (40b) are laser welded by their respective front and rear longitudinal edges.

## Patentansprüche

1. Dachquerträger (31) zum strukturellen Überbrücken von Dachseitenelementen (32) an einem Ende eines Daches (11) eines Eisenbahnpersonenwagens (2, 3) angrenzend an einen Übergangsbalken (4) und umfassend eine Vielzahl von Strukturelementen, wobei die Strukturelemente ein oberes Strukturelement (40a) und ein unteres Strukturelement (40b) umfassen, die geformt und zusammengefügt sind, um eine hohle Struktur auszubilden, die Mittel zum Durchführen nicht-mechanischer Funktionen integriert; die Mittel zum Durchführen nicht-mechanischer Funktionen umfassen:
- einen Wasserentwässerungskanal (34), der an einem zentralen Teil des Dachquerträgers (31) angeordnet ist und sich im Wesentlichen quer durch den Dachquerträger (31) erstreckt, um Wasser abzuführen, das sich auf dem Dach (11) auf dem oberen Teil des Übergangsbalkens (4) ansammelt.

2. Dachquerträger nach Anspruch 1, ferner umfassend:
- mindestens ein elektrisches Gehäuse (29), das in einem leeren Volumen untergebracht ist, das sich zwischen den oberen und unteren Strukturelementen (40a, 40b) des Dachquerträgers (31) zwischen dem Entwässerungskanal (34) und einem Ende des Dachquerträgers (31) befindet.

3. Dachquerträger nach Anspruch 1 oder 2, wobei die Strukturelemente durch Laserschweißen miteinander verbunden sind, um dem Dachquerträger (31) mechanische Festigkeit zu verleihen, wobei die oberen und unteren Strukturelemente (40a, 40b) durch ihre jeweiligen Längskanten mechanisch befestigt sind, so dass der Dachquerträger (31) einen im Wesentlichen viereckigen Querschnitt mit einer Vorderseite (33) gegenüber einer Rückseite (41) und einer Unterseite (39) gegenüber einer Oberseite (44) aufweist.

4. Dachquerträger nach Anspruch 3, wobei:
- das untere Strukturelement (40b) mindestens eine aufrechte Wand (51) aufweist, die sich von einer hinteren Längskante einer Bodenplatte (52) nach oben erstreckt, wobei die aufrechte Wand (51) mindestens einen Teil der Rückseite (41) des Dachquerträgers (31) ausbildet und die Bodenplatte (52) die Unterseite (39) des Dachquerträgers (31) ausbildet; und/oder
- das obere Strukturelement (40a) eine nach unten geneigte Wand (49) aufweist, die sich von einer vorderen Längskante einer Deckelplatte (48) nach unten erstreckt, wobei die nach unten geneigte Wand (49) die Vorderseite (33) des Dachquerträgers (31) ausbildet und die Deckelplatte (48) die Oberseite (44) des Dachquerträgers (31) ausbildet.

5. Dachquerträger nach Anspruch 3 oder 4, wobei sich der Entwässerungskanal (34) rückwärtig von der Rückseite des Dachquerträgers (31) erstreckt, um sich über den Übergangsbalken (4) zu erstrecken, und umfasst:
- einen Wassereinlass (37), der durch die Vorderseite (33) des Dachquerträgers (31) ausgebildet ist, mit einer Schwelle, die bündig mit einer Oberseite des Dachs (11) ist, so dass sich auf dem Dach (11) ansammelndes Regenwasser ohne Hindernisse in den Entwässerungskanal (34) fließt; und/oder
- einen Wasserauslass (38), der durch die Unterseite (39) des Dachquerträgers (31) ausgebildet ist und auf den oberen Teil des Übergangsbalkens (4) führt, so dass Regenwasser in dem Entwässerungskanal natürlich nach unten auf den Übergangsbalken (4) abgeleitet wird.

6. Dachquerträger nach einem der Ansprüche 2 bis 5, wobei mindestens eine Öffnung (43, 45) auf der Oberseite (44) des oberen Strukturelements (40a) ausgebildet ist, um Zugang zu dem mindestens einen elektrischen Gehäuse (29) und/oder dem Entwässerungskanal (34) zu erhalten.

7. Dachquerträger nach einem der Ansprüche 2 bis 6, umfassend zwei elektrische Gehäuse (29), die auf jeder Seite des Entwässerungskanals (34) angeordnet sind.

8. Dachbaugruppe für einen Eisenbahnpersonenwagen (2, 3), umfassend Seitenträger (32), die sich längs entlang seitlicher Kanten eines Daches (11) erstrecken, und einen Dachquerträger (31), der sich zwischen den Seitenträgern (32) entlang einer Querkante des Daches (11) benachbart zu einem Übergangsbalken (4) erstreckt, **dadurch gekennzeichnet, dass** der Dachquerträger (31) in einem der vorstehenden Ansprüche definiert ist.

9. Personenwagen **dadurch gekennzeichnet, dass** er eine Dachbaugruppe (30) nach Anspruch 8 umfasst, wobei nicht-mechanische Funktionen in einen Dachquerträger integriert sind, wie in einem der Ansprüche 1 bis 7 definiert.

10. Verfahren zum Herstellen eines Dachquerträgers nach einem der Ansprüche 1 bis 7, wobei:
- die strukturellen Elemente durch Schlitze und Laschen vormontiert sind;
- die strukturellen Elemente durch Laserschweißen aneinander befestigt sind; und/oder
- das obere Strukturelement (40a) und das untere Strukturelement (40b) an ihren jeweiligen vorderen und hinteren Längskanten lasergeschweißt sind.

## Revendications

1. Traverse de toit (31) destinée à relier structurellement des longerons de toit (32) au niveau d'une extrémité d'un toit (11) d'une voiture de passagers ferroviaire (2, 3) adjacente à un soufflet d'intercirculation (4) et comprenant une pluralité d'éléments structurels, dans laquelle lesdits éléments structurels comprennent un élément structurel supérieur (40a) et un élément structurel inférieur (40b) formés et fixés ensemble pour former une structure creuse intégrant des moyens pour effectuer des fonctions non mécaniques ; lesdits moyens pour effectuer des fonctions non mécaniques comprennent :
- un canal de drainage d'eau (34) situé sur une partie centrale de ladite traverse de toit (31) et s'étendant sensiblement transversalement à travers ladite traverse de toit (31) pour évacuer l'eau s'accumulant sur le toit (11) sur la partie supérieure dudit soufflet d'intercirculation (4).

2. Traverse de toit selon la revendication 1, comprenant en outre :
- au moins un boîtier électrique (29) logé à l'intérieur d'un volume vide situé entre lesdits éléments structurels supérieur et inférieur (40a, 40b) de ladite traverse de toit (31) entre ledit canal de drainage (34) et une extrémité de ladite traverse de toit (31).

3. Traverse de toit selon la revendication 1 ou 2, dans laquelle lesdits éléments structurels sont fixés ensemble par soudage laser pour fournir une résistance mécanique à ladite traverse de toit (31), tandis que lesdits éléments structurels supérieur et inférieur (40a, 40b) sont fixés mécaniquement par leurs bords longitudinaux respectifs de sorte que ladite traverse de toit (31) présente une section transversale sensiblement quadrilatérale avec un côté avant (33) opposé à un côté arrière (41), et un côté inférieur (39) opposé à un côté supérieur (44).

4. Traverse de toit selon la revendication 3, dans laquelle :
- ledit élément structurel inférieur (40b) présente au moins une paroi verticale (51) s'étendant vers le haut à partir d'un bord longitudinal arrière d'une plaque de base (52), ladite paroi verticale (51) formant au moins une partie de ladite côté arrière (41) de ladite traverse de toit (31), et ladite plaque de base (52) formant ledit côté inférieur (39) de ladite traverse de toit (31) ; et/ou
- ledit élément structurel supérieur (40a) présente une paroi inclinée vers le bas (49) s'étendant vers le bas à partir d'un bord longitudinal avant d'une plaque de couvercle (48), ladite paroi inclinée vers le bas (49) formant ledit côté avant (33) de ladite traverse de toit (31) et ladite plaque de couvercle (48) formant ledit côté supérieur (44) de ladite traverse de toit (31).

5. Traverse de toit selon la revendication 3 ou 4, dans laquelle ledit canal de drainage (34) fait saillie vers l'arrière à partir du côté supérieur de ladite traverse de toit (31) pour s'étendre au-dessus dudit soufflet d'intercirculation (4), et comprend :
- une entrée d'eau (37) formée à travers le côté avant (33) de ladite traverse de toit (31) avec un seuil affleurant une face supérieure dudit toit (11) de sorte que l'eau de pluie s'accumulant sur ledit toit (11) s'écoule sans entraves dans ledit canal de drainage (34) ; et/ou
- une sortie d'eau (38) formée à travers le côté inférieur (39) de ladite traverse de toit (31) et débouchant sur la partie supérieure dudit soufflet d'intercirculation (4) de sorte que l'eau de pluie dans le canal de drainage soit naturellement évacuée vers le bas sur ledit soufflet d'intercirculation (4).

6. Traverse de toit selon l'une quelconque des revendications 2 à 5, dans laquelle au moins une ouverture (43, 45) est formée sur le côté supérieur (44) de l'élément structurel supérieur (40a) pour accéder audit au moins un boîtier électrique (29) et/ou audit canal de drainage (34).

7. Traverse de toit selon l'une quelconque des revendications 2 à 6, comprenant deux boîtiers électriques (29) situés de chaque côté dudit canal de drainage (34).

8. Ensemble de toit pour une voiture de passagers ferroviaire (2, 3) comprenant des longerons (32) s'étendant longitudinalement le long des bords latéraux d'un toit (11) et une traverse de toit (31) s'étendant entre lesdits longerons (32) le long d'un bord transversal dudit toit (11) adjacent à un soufflet d'intercirculation (4), **caractérisé en ce que** ladite traverse de toit (31) est définie selon l'une quelconque des revendications précédentes.

9. Voiture de passagers **caractérisée en ce qu'**elle comprend un ensemble de toit (30) selon la revendication 8, dans laquelle des fonctions non mécaniques sont intégrées dans une traverse de toit selon l'une quelconque des revendications 1 à 7.

10. Procédé de fabrication d'une traverse de toit selon l'une quelconque des revendications 1 à 7, dans lequel :
- lesdits éléments structurels sont préassemblés par des fentes et des pattes ;
- lesdits éléments structurels sont fixés ensemble par soudage laser ; et/ou
- ledit élément structurel supérieur (40a) et ledit élément structurel inférieur (40b) sont soudés au laser par leurs bords longitudinaux avant et arrière respectifs.
